# EUROPEAN PATENT SPECIFICATION

(11) **EP 1 105 933 B1**
(45) Date of publication and mention of the grant of the patent: **31.03.2004**
(21) Application number: 99907422.2
(22) Date of filing: 26.01.1999
(51) Int. Cl.: H01Q 1/08

(54) **ANTI-THEFT ANTENNA**
DIEBSTAHLGESICHERTE ANTENNE
ANTENNE ANTIVOL

(30) Priority: 11.08.1998 IT VI980153
(43) Date of publication of application: 13.06.2001
(73) Proprietor: Calearo Antenne Srl, 20124 Milano (IT)
(72) Inventor: Calear, Massimo, 36030 Costabissara (VI) (IT)
(74) Representative: Bonini, Ercole
(86) International application number: PCT/EP1999/000486
(87) International publication number: WO 2000/010221

(56) References cited:
- EP-A- 0 443 172
- WO-A-96/13074
- DE-U- 8 703 563
- GB-A- 2 165 298
- GB-A- 2 308 013
- US-A- 5 112 156
- US-A- 5 603 630

## Description

The invention concerns an antenna particularly suitable for being applied to motor vehicles.

It is known that antennas for motor vehicles substantially consist of a support base applied to the body of the car and supporting a rod which constitutes the active element of the antenna.

In the known applications the rod of the antenna can be fixed or it can be oriented with respect to the base and it is connected to the base by means of connection means, for example screws, pins and the like. Said connection means make therefore the antenna to be removable with respect to the base.

Therefore, one of the drawbacks of the known antennas is represented by the fact that unauthorized persons can remove the rod with rather simple operations, even if this requires the use of appropriate tools.

DE-U-8703563 discloses a blocking and release device for an antenna having a rod suitable for receiving radio-frequency signals connected to a joint element belonging to a support base. The device substantially consists of an elastic bush in which is inserted the telescopic part of the antenna that can be released from said bush.

The present invention is aimed at eliminating such a drawback. In particular one of the aims of the invention is that of realizing an antenna particularly suitable for being installed on motor vehicles that should also have anti-theft features, that is, features suitable for preventing the removal of the rod from the support base.

Another aim of the invention is the realization of an antenna in which said anti-theft features can be provided both on the version with adjustable inclination and on the fixed version.

The aims mentioned above have been achieved through the realization of an antenna particularly suitable for being installed on motor vehicles, the main features of which are according to claim 1.

According to a preferred embodiment the elastic terminal element belongs to the antenna rod and includes a terminal body whose end has a clutch head having at least an inclined surface suitable for allowing the elastic deformation of said terminal element during the passing through a first hole belonging to said housing and being more narrow than the greatest dimensions of said clutch head.

In order to make the elastic deformation of the terminal element easier, the clutch head and at least a part of the terminal body length have at least a through notch developing along the longitudinal axis of the terminal element.

The aims described above and any other detail will be better highlighted in the following description, with reference to the enclosed drawings, wherein:
Fig. 1 shows the antenna according to the invention;
Fig. 2 is an exploded view of the antenna of fig. 1;
Fig. 3 shows the detail of the elastic terminal element belonging to the antenna rod;
Fig. 4 shows a plan view of the detail of fig. 3;
Fig. 5 shows the longitudinal section of the joint element of the antenna suitable for receiving the coupling of the elastic terminal element shown in fig. 3;
Fig. 6 shows the elastic terminal element of fig. 3 and the joint element of fig. 5 during the reciprocal coupling;
Fig. 7 shows the detail of fig. 6 after the coupling has been carried out;
Fig. 11, 14, 17 show some executive variants of the detail shown in fig. 3;
Fig. 12, 15, 18 show the plan views of the respective details shown in figg. 11, 14, 17;
Figg 13, 16, 19 show the longitudinal section of executive variants of the joint elements of the joint element shown in fig. 5 each one suitable to be coupled with the respective elastic terminal element shown in figg. 11, 14, 17;
Fig. 20 shows a further executive variant of the elastic terminal element belonging to the end of the joint element 3;
Fig 21 shows the plan view of the detail of fig. 20;
Fig. 22 shows the housing of the detail of fig. 20 in a longitudinal section.

It is right to specify that according to the preferred embodiment which will be described later on, the antenna of the invention having anti-theft features has a rod which is fixed with respect to the base.

However it is clear that what will be said concerns also a different embodiment in which the rod of the antenna is swinging with respect to its base.

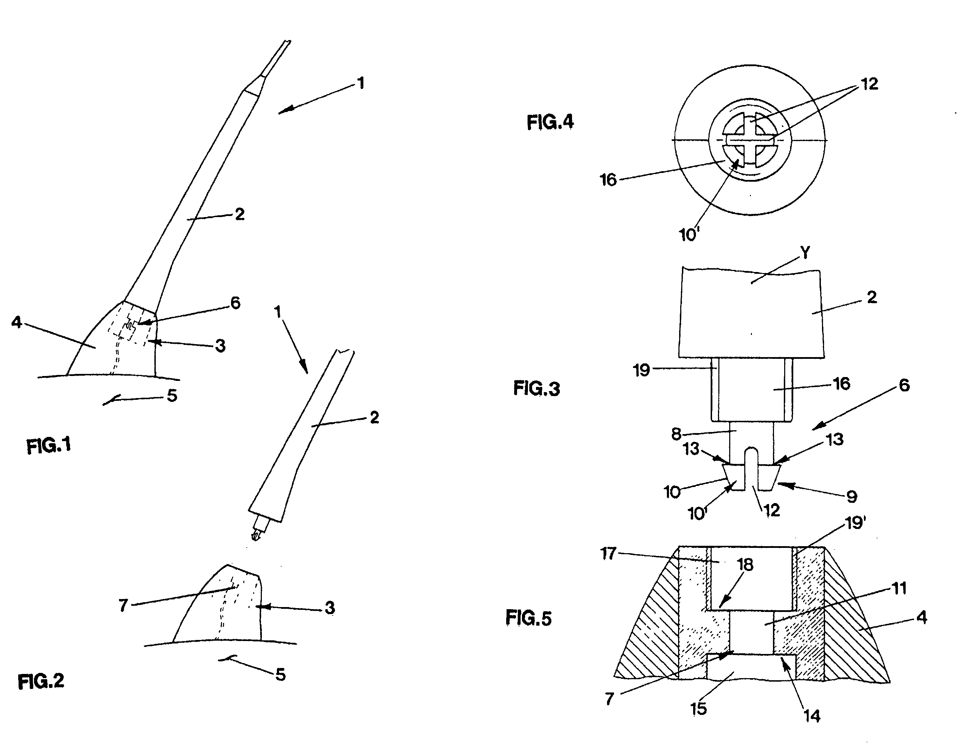

As it can be observed in figg. 1 and 2, the antenna of the invention, marked with 1 as a whole, includes a rod 2 connected to a joint element 3 belonging to a support base 4 which is firmly fixed to a support surface 5 formed for example by a moto vehicle body, not represented in the drawings.

A particular feature of the invention is that the rod 2 or the joint element 3 have an elastic terminal element 6 suitable for being inserted through a respective and unidirectional release movement in a respective housing, marked with 7 as a whole, belonging to said joint element 3 or to said rod 2.

More particularly, as it can be observed in the figg. 3 to 5, the elastic terminal element 6 is applied to the rod 2 and includes a terminal body 8 whose end has a clutch head 9. The latter has an inclined surface 10 allowing the elastic deformation of the terminal element 6 during the passing through the first hole 11. Said hole11 belongs to the housing 7 obtained in the joint element 3 and is more narrow than the greatest dimensions of the clutch head 9.

In order to make the terminal element 6 more elastic, the clutch head 9 and a part of the length of the terminal body 8 have at least four through notches developing along the longitudinal axis Y of the terminal element 6.

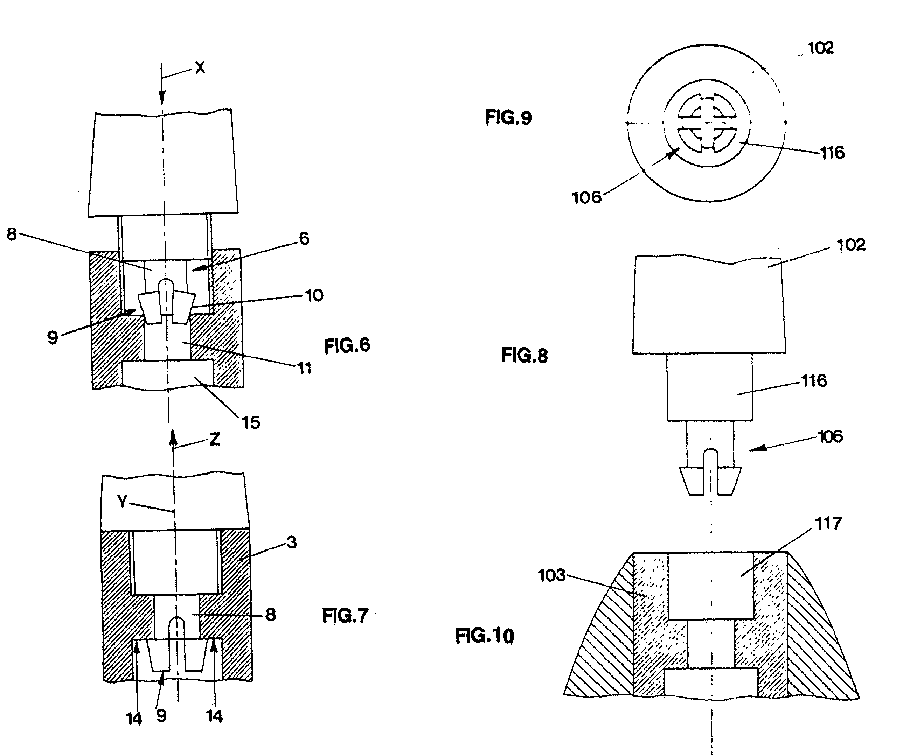

It can also be observed that the clutch head 9 has in its perimeter at least an area projecting from the respective perimeter of the terminal body 8 and defining at least a projecting flat surface 13 suitable for interfering with a corresponding undercut surface 14 belonging to said housing 7. This undercut surface 14 is realized where the first hole 11 is connected to the second hole 15, coaxial and following it, in which the clutch head 9 is housed when the terminal element 6 and the joint element 3 are coupled, as it can be observed in figg. 6 and 7.

In particular, as it can be observed in fig. 6, when the rod 2 is axially pushed along the direction X against the joint element 3, the inclined surface 10 of the clutch head 9 press the first hole 11 and creates the radial contraction of the clutch head 9 and of the terminal body 8. Carrying on the thrust along the direction X, the clutch head 9 goes through the first hole 11 and when it comes to the second hole 15 it expands because of the elastic recovery of the material with which it is realized. The terminal element 6 comes back in the configuration represented in fig. 7 . Said configuration and the one preceding the coupling are the same. In this situation the projecting flat surface 13 of the clutch head 9 is opposed to the undercut surface 14 so that the separation of the terminal element 6 from the respective joint element 3 is carried out only after a breaking of the clutch head 9 caused by a traction according to the direction Z along the longitudinal axis Y.

Therefore a firm coupling between the rod 2 and the joint element 3 gives anti-theft features to the antenna as a whole.

The terminal element 6 too is realized coaxial to the end of a centering body 16, placed on the continuity of the rod 2 and housed in a respective centering seat 17 realized in the joint element 3. The centering seat 17 is realized coaxial and aligned to the first hole 11 of the housing 7. Said centering seat has a larger perimeter than the housing 7 so that it defines a shoulder area 18 suitable to receive as a base the centering body 16.

The centering body 16 and the respective centering seat 17 have both a thread, respectively 19, 19', for the reciprocal coupling.

In the described embodiment the centering body 16 and the terminal body 8, as well as the respective seats and holes in which they are coupled, have a cross-sectional circular profile while the inclined surface 10 of the clutch head 9 is a curved surface having the profile of a truncated cone 10'.

In another different embodiment, shown in figg. 8 to 10, the terminal element, marked with 106 as a whole and belonging in this case too to the rod 102, is fixed to the end of a centering body 116. The latter has a circular cross-sectional profile which is coupled through a sliding in a corresponding centering seat 117 of the joint element 103. The centering body and the centering seat are both unprovided with a thread.

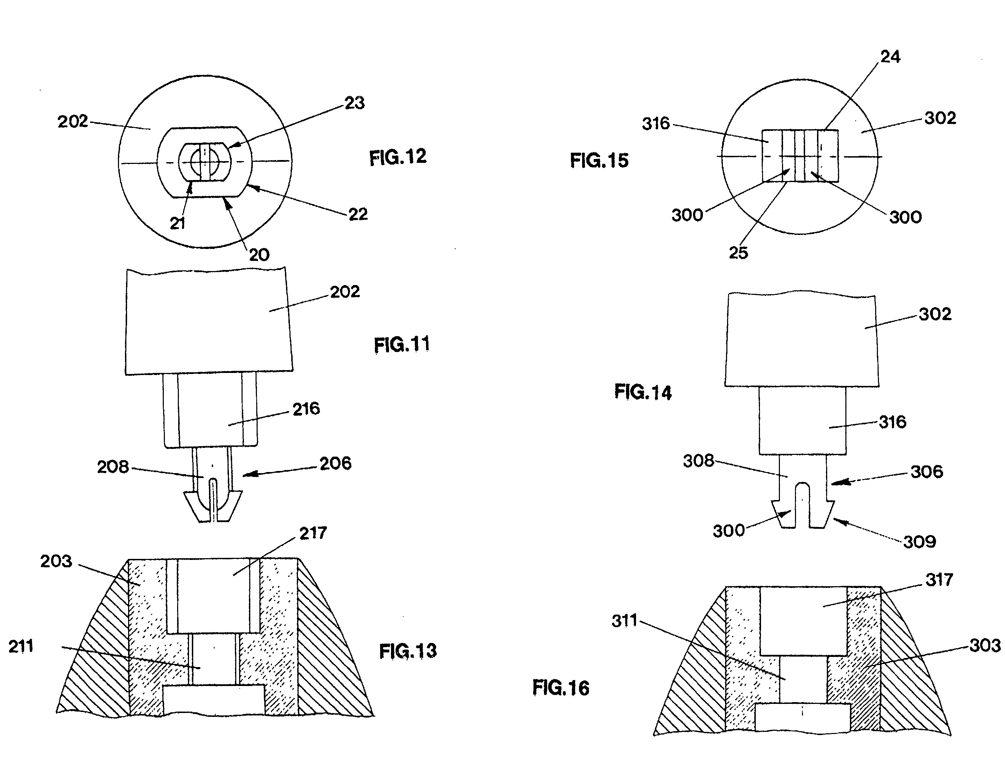

In another executive variant, shown in figg. 11 to 13, the terminal element, marked with 206 as a whole and belonging in this case too to the rod 202, is fixed to the end of the centering body 216.The centering body 216 and the terminal body 208 of the terminal element 206 have cross-sectional profiles consisting in parallel flat surfaces 20 and 21, connected by curved profiles, respectively 22 and 23.

Of course the respective centering seat 217 and the first hole 211 of the respective joint element 203 have, them too, corresponding flat and curved surfaces suitable for defining conjugated profiles suitable for receiving the coupling respectively of the centering body 216 and of the terminal body 208.

In another embodiment shown in the figg. 14 to 16 the terminal element, belonging to the rod 302, marked with 306 as a whole, and the centering body 316 have quadrangular cross-sectional profiles respectively 24 and 25. The first hole 311 and the centering seat 317 of the joint element 303 too should have corresponding profiles. The inclined surfaces of the clutch head 309 are flat surfaces 300.

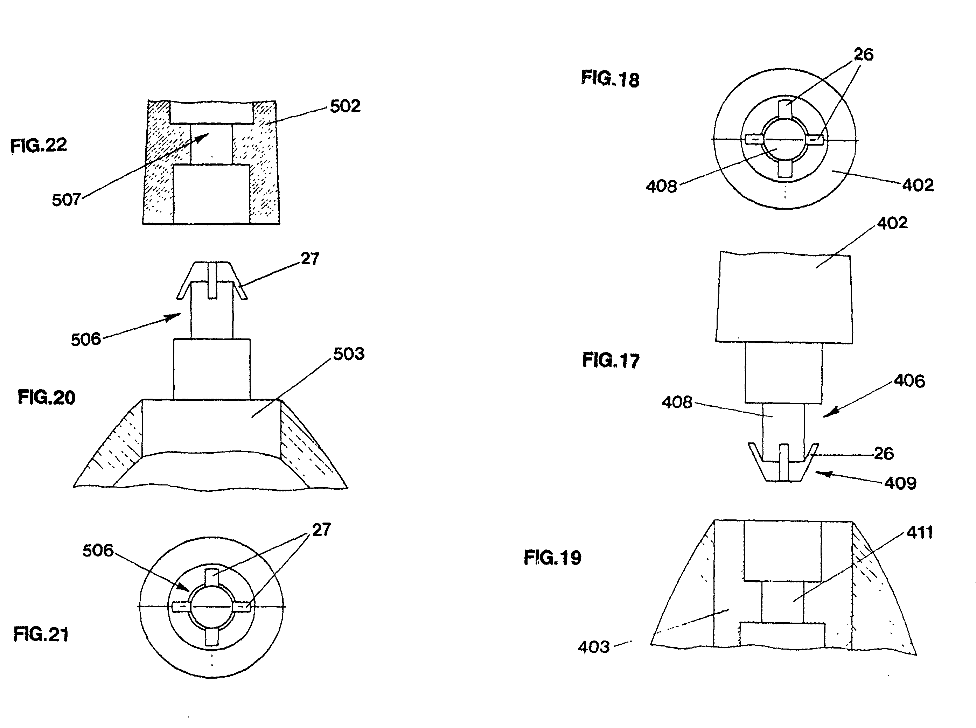

According to a further executive variant shown in figg. 17 to 19 the terminal element, marked with 406 as a whole, belongs to the rod 402 and has the clutch head 409 provided with elastic finnings 26. The latter project from the terminal body 408 in order to give elasticity to the terminal element 406 in the same way as the notches which are present in the other described embodiments.

The transversal dimension of the first hole 411 of the respective joint element 403 should allow the passing of the terminal body 408 and of the finnings 26 adhering to it.

Another executive variant is shown in figg. 20 to 22 where it can be observed that in this case the terminal element 506 belongs to the joint element 503 while the housing 507 in which it is received belongs to the rod 502.

The elasticity of the terminal element 506 is provided with finnings 27 having the same shape in the executive variant shown in the figg. 17 to 19.

However it is clear that all the executive variants previously described can include an elastic terminal element realized in the joint element, instead of being realized on the rod. Consequently the housing, suitable for receiving the joint element, will be realized in the rod, instead of being realized in the joint element.

## Claims

1. Antenna (1) comprising a rod (402; 502) suitable for receiving radio-frequency signals and connected to a joint element (403; 503) belonging to a support base (4) which is constrained to a support surface (5), said rod (402; 502) or said joint element (403; 503) being provided with an elastic terminal element (406; 506), **characterized in that** said elastic terminal element (406; 506) includes a terminal body (408) whose end has a clutch head (409) having elastic finnings (26; 27) projecting from said terminal body (408), suitable to give elasticity to said terminal element (406; 506).

2. Antenna (1) according to claim 1) **characterized in that** said elastic terminal element (406; 506) is suitable to be inserted through a respective and unidirectional release movement in a respective housing (507) belonging to said joint element (403; 503) or to said rod (402; 502).

3. Antenna (1) according to claim 2) **characterized in that** said housing (507) includes at least a first hole (411) suitable for housing said terminal body (408) followed by a second hole having a larger section with respect to the preceding one and coaxial to it, suitable for housing said clutch head (409) having bigger dimensions in respect of the section of said first hole (411) to avoid the removal of said rod (402; 502) from said joint element (403; 503).

4. Antenna (1) according to claim 1) **characterized in that** said terminal element (406) is realized coaxial to the end of a centering body placed on the continuity of said rod (402) and adjacent to said elastic terminal element (406), said centering body being housed in a respective centering seat realized in said joint element (403).

5. Antenna (1) according to claim 1) **characterized in that** said terminal element (506) is realized coaxial to the end of a centering body placed on the continuity of said joint element (503) and adjacent to said elastic terminal element (506), said centering body being housed in a respective centering seat realized in said rod (502).

6. Antenna (1) according to claims 4) or 5) **characterized in that** said centering seat is realized coaxial and aligned to said first hole (411) of said housing (507), said centering seat having a larger perimeter than said housing (507) so that it defines a shoulder area suitable to receive as a base said centering body.

7. Antenna (1) according to claim 4) **characterized in that** said centering body and the respective centering seat have circular and transverse conjugated profiles.

8. Antenna (1) according to claim 3) **characterized in that** said terminal body (408) and the respective first hole (411) have connectable circular transversal conjugated profiles.

## Patentansprüche

1. Antenne (1) für den Empfang von Funkfrequenzsignalen, eine Stange (402; 502) umfassend und an ein Verbindungselement (403; 503) angeschlossen, das zu einer Tragbasis (4) gehört, welche an einer Tragfläche (5) verankert ist, wobei die Stange (402; 502) oder das Verbindungselement (403; 503) mit einem elastischen Endelement (406; 506) versehen ist, **dadurch gekennzeichnet; dass** das elastische Endelement (406; 506) einen Endkörper (408) aufweist, an dessen Ende sich ein Kupplungskopf (409) mit elastischen Lamellen (26; 27) befindet, die aus dem Endkörper (408) herausragen und geeignet sind, dem Endelement (406; 506) Elastizität zu verleihen.

2. Antenne (1) gemäß Patentanspruch 1), **dadurch gekennzeichnet, dass** das elastische Endelement (406; 506) geeignet ist, durch eine entsprechende und einsinnige Freigabebewegung in eine entsprechendes Gehäuse (507) eingefügt zu werden, die zu dem Verbindungselement (403; 503) oder zu der Stange (402; 502) gehört.

3. Antenne (1) gemäß Patentanspruch 2), **dadurch gekennzeichnet, dass** das Gehäuse (507) wenigstens ein erstes Loch (411) aufweist, das geeignet ist, den Endkörper (408) aufzunehmen, gefolgt von einem zweiten Loch mit größerem Querschnitt als das erste und zu diesem koaxial angeordnet, dazu geeignet, den Kupplungskopf (409) aufzunehmen, aufgrund der größeren Abmessungen als jener des erstens Lochs (411), zur Vermeidung einer Entfernung der Stange (402; 502) aus dem Verbindungselement (403; 503).

4. Antenne (1) gemäß Patentanspruch 1), **dadurch gekennzeichnet, dass** das Endelement (406) koaxial zum Ende eines Zentrierkörpers an der Fortsetzung der Stange (402) und angrenzend an das elastische Endelement (406) positioniert ist, wobei der Zentrierkörper in einem entsprechenden Zentriersitz in dem Verbindungselement (403) aufgenommen wird.

5. Antenne (1) gemäß Patentanspruch 1), **dadurch gekennzeichnet, dass** das Endelement (506) koaxial zum Ende eines Zentrierkörpers an der Fortsetzung des Verbindungselements (503) und angrenzend an das elastische Endelement (506) positioniert ist, wobei der Zentrierkörper in einem entsprechenden Zentriersitz in der Stange (502) aufgenommen wird.

6. Antenne (1) gemäß Patentanspruch 4) oder 5), **dadurch gekennzeichnet, dass** der Zentriersitz koaxial zum und auf das erste Loch (411) des Gehäuses (507) ausgerichtet ist, wobei der Zentriersitz einen breiteren Umkreis hat als das Gehäuse (507), so dass es einen Schulerbereich definiert, der geeignet ist, als Basis den Zentrierkörper aufzunehmen.

7. Antenne (1) gemäß Patentanspruch 4), **dadurch gekennzeichnet, dass** der Zentrierkörper und der entsprechende Zentriersitz kreisförmige und quer zusammenpassende Profile haben.

8. Antenne (1) gemäß Patentanspruch 3), **dadurch gekennzeichnet, dass** der Endkörper (408) und das entsprechende erste Loch (411) verbindbare kreisförmige und quer zusammenpassende Profile haben.

## Revendications

1. Antenne (1) comprenant une barre (402; 502) indiquée pour recevoir des signaux de radiofréquence et reliée à un élément de jonction (403; 503) appartenant à une base de support (4) qui est bloquée à une surface de support (5), ladite barre (402; 502) ou ledit élément de jonction (403; 503) étant équipés d'un élément final élastique (406; 506), **caractérisée en ce que** ledit élément final élastique (406; 506) comprend un corps final (408) dont l'extrémité a une tête d'enclenchement (409) ayant des ailettes élastiques (26; 27) saillant dudit corps final (408), indiqués pour donner de l'élasticité audit élément final (406; 506).

2. Antenne (1) selon la revendication 1) **caractérisée en ce que** ledit élément final élastique (406; 506) est indiqué pour être introduit au moyen d'un mouvement respectif et unidirectionnel de relâchement dans un logement correspondant (507) appartenant audit élément de jonction (403; 503) ou à ladite barre (402; 502).

3. Antenne (1) selon la revendication 2) **caractérisée en ce que** ledit logement (507) comprend au moins un premier trou (411) indiqué pour loger ledit corps final (408) suivi par un deuxième trou ayant une section plus large par rapport au précédent et coaxial par rapport à celui-ci, indiqué pour loger ladite tête d'enclenchement (409) ayant des dimensions plus grandes par rapport à la section dudit premier trou (411) pour empêcher la dépose de ladite barre (402; 502) dudit élément de jonction (403; 503).

4. Antenne (1) selon la revendication 1) **caractérisée en ce que** l'élément final (406) est coaxial par rapport à l'extrémité d'un corps de centrage positionné sur la continuation de ladite barre (402) et adjacent audit élément final élastique (406), ledit élément de centrage étant logé dans un siège de centrage correspondant réalisé dans ledit élément de jonction (403).

5. Antenne (1) selon la revendication 1) **caractérisée en ce que** ledit élément final (506) est coaxial par rapport à l'extrémité d'un corps de centrage positionné sur la continuation dudit élément de jonction (503) et adjacent audit élément final élastique (506), ledit corps de centrage étant logé dans un siège de centrage correspondant réalisé dans ladite barre (502).

6. Antenne (1) selon les revendications 4) ou 5) **caractérisée en ce que** ledit siège de centrage est coaxial et aligné audit premier trou (411) dudit logement (507), ledit siège de centrage ayant un périmètre plus grand que celui du logement (507) de façon à définir une zone d'épaulement indiquée pour recevoir comme base ledit corps de centrage.

7. Antenne (1) selon la revendication 4) **caractérisée en ce que** ledit corps de centrage et le siège de centrage correspondant ont des profils circulaires et transversaux conjugués.

8. Antenne (1) selon la revendication 3) **caractérisée en ce que** ledit corps final (408) et le premier trou correspondant (411 ) ont des profils connectables, circulaires et transversaux conjugués.
